# EUROPEAN PATENT SPECIFICATION

(11) **EP 1 738 659 B1**
(45) Date of publication and mention of the grant of the patent: **24.06.2015**
(21) Application number: 06253431.8
(22) Date of filing: 29.06.2006
(51) Int. Cl.: A23L 1/30, A23L 1/304, A23L 1/305, A23L 2/44, A23L 2/62, A23L 2/68, A23L 2/60

(54) **Sports drink acid blend to reduce or eliminate aftertaste**
Sportgetränkssäurenmischung zur Verringerung oder Beseitigung des Nachgeschmacks
Mélange d'acides de boissons de sports pour réduire ou éliminer l'après-goût

(30) Priority: 29.06.2005 US 169358
(43) Date of publication of application: 03.01.2007
(73) Proprietor: Stokely-Van Camp, Inc., Chicago, IL 60661 (US)
(72) Inventor: Jendrysik, Rod, Sycamore, IL 60178 (US); Skrypec, MaryKay, Buffalo Grove, IL 60089 (US); Kappes, Stacey M., Champaign, IL 61822 (US)
(74) Representative: Zvesper, Thomas

(56) References cited:
- WO-A-95/11019
- US-A- 6 039 987
- US-A1- 2003 118 694
- US-A1- 2004 022 921
- US-A1- 2004 091 517
- US-A1- 2005 129 829

## Description

### Field of the Invention

The present invention relates to an improved sports beverage which provides for fluid, carbohydrate and electrolyte replacement. The beverage comprised of a novel acidulant blend substantially reduces the level of aftertaste of typical sports beverages and increases significantly the gulpability of such sports drinks.

### Background of the Invention

Sports beverages provide important benefits to athletes such as rehydrating the body and replenishing lost electrolytes and carbohydrates after performing physical activities. Such sports beverages typically are non-carbonated. Even though these sports beverages provide great benefits to athletes, sometimes they are not consumed in adequate quantities to achieve these benefits. Such sports beverages have what some consumers deem to be an excessive level of aftertaste. In addition, research has shown that athletes experience taste burnout due to the level of aftertaste typical of sports beverages.

Compositions utilizing phosphoric acid and citric acid are known. For example, WO 95/11019 to Welbourne utilizes compositions to be consumed over a 15 to 20 minute period before exercise in order to induce growth hormone production and to reduce body fat prior to exercising. U.S. Patent Application No. 2004/0022921 to Lee et al.*,* teaches the use of combinations of phosphoric acid and citric acid in order to stabilize lemon/lime flavored beverages. U.S. Patent Application No. 2004/0091517 to Baker et al.*,* teaches the use of polyphosphate in acidic oral compositions to alleviate or prevent tooth decay associated with the consumption of acid. In addition, U.S. Patent Application No. 2003/0118694 to Hojo et al.*,* provides inorganic particle containing additive compositions that are stable and dispersible in food compositions.

A need exists for a sports beverage, particularly a non-carbonated sports beverage, that has either no or at least a substantially reduced aftertaste. Another object of the present invention is to improve the "chuggability" or "gulpability" of sports beverages, i.e., including the tendency of the user to drink the beverage relatively rapidly when thirsty.

### Summary of the Invention

The present invention provides a non-carbonated sports beverage composition, and a method of preparing a non-carbonated sports beverage composition, as described in the claims.

In accordance with one aspect of the present specification, a non-carbonated sports beverage composition is provided that at least substantially reduces the level of aftertaste and provides a more pleasant aftertaste. The non-carbonated sports beverage composition typically comprises water, electrolytes, a material selected from carbohydrates, non-nutritive sweeteners and combinations thereof, one or more flavoring agents, and a novel acidulant. The novel acidulant comprises citric acid in an amount from 0.10% to 0.15% by weight of the non-carbonated sports beverage composition and phosphoric acid, wherein the ratio of citric acid to phosphoric acid is from 3.5:1 to 4.2:1 and wherein the non-carbonated sports beverage composition has a pH from 2.5 to 4.5 and more specifically 2.7 to 3.3.

Unexpectedly, the novel acidulant in accordance with the present invention significantly reduces the level of aftertaste of sports beverages and also provides a more pleasant aftertaste. Further, it was unexpectedly found that the combination of the citric acid and the phosphoric acid in the ratio used in the present invention is effective in stimulating the desire to consume the inventive beverages. As a result and to the surprise of the inventors, athletes more readily "chug," "gulp" or drink relatively rapidly the non-carbonated sports beverage of the present invention as compared to conventional sports beverages. Conventional sports beverages typically contain only citric acid as the acidulant.

In accordance with another aspect of the present specification, a method for making a non-carbonated sports beverage composition that has a reduced level of aftertaste is provided. The method comprises the steps of: adding citric acid in an amount from 0.10% to 0.15% by weight of said non-carbonated sports beverage composition, adding phosphoric acid wherein the weight ratio of citric add to phosphoric acid is from 0.5:1 to 13.8:1, and wherein said sports beverage has a pH from 2.5 to 4.0.

A beverage in accordance with the invention may also include protein in an amount as desired.

### Detailed Description of the Invention

In accordance with the present invention, a non-carbonated sports beverage composition having a reduced level of aftertaste compared to conventional sports beverages is provided. The beverage in accordance with the invention may also have a more pleasant aftertaste. Typical non-carbonated sports beverage compositions in accordance with the specification comprise water, electrolytes, carbohydrate, one or more flavoring agents, optionally one or more sweetening agents, one or more color agents and citric acid and phosphoric acid in a suitable ratio and amount. Typically, the pH of the sports beverage will be in the range of from 2.5 to 4.5, preferably from 2.5 to 4.0. The amounts of water, electrolytes, carbohydrates, flavoring agents and sweetener can be as desired. These are well-known components of sports beverages. The inventive citric/phosphoric acid combination in the specified amounts and ratios provides the recited advantages even in the absence of a flavor component or agent.

An unexpected result of the present invention is the significant reduction in the level of aftertaste and providing a more pleasant aftertaste. Another unexpected result of the present invention is the effective increase in gulpability by the novel combination of the citric acid and the phosphoric acid in the ratio used in the present invention as well as a more pleasant aftertaste. Surprisingly, athletes "chugged" the non-carbonated sports beverage of the present invention as compared to other sports beverages. The combination of phosphoric acid and citric acid in the recited amounts and ratios provides a cleaner tasting sports beverage with minimal to no aftertaste, despite the presence of sports beverage electrolytes.

The terms "chug," "chugged," "chuggability," "gulpability," "gulpable" and variations thereof as used herein mean the drinking of a beverage in gulps or to drink relatively hurriedly or quickly.

While not wishing to be bound by theory, it is believed that the novel acid components amount and specific weight ratio of the acid in a sports beverage result in these unexpected and highly desirable properties. In accordance with another aspect of the present specification, the citric acid of the present invention is anhydrous citric acid. The amount of citric acid preferably comprises from 0.10% to 0.15% by weight of the non-carbonated sports beverage, and most preferably in the range from 0.12% to 0.13% by weight of the non-carbonated sports beverage.

In accordance with another aspect of the present specification, the phosphoric acid used in the present invention may be phosphoric acid at 75% strength. The weight ratio of citric acid to phosphoric acid typically comprises from 0.5:1 to 13.8:1, preferably from 3.0:1 to 7.0:1, and most preferably in the range from 5.0:1 5.2:1.

In accordance with still another aspect of the present specification, a flavoring agent optionally may be used in a beverage in accordance with the present invention. The flavoring agent of the beverage of the present invention also impacts the overall acceptance of the beverage. In order to achieve this overall acceptance, the strength of the flavor cannot be too intense. Of course, the flavor intensity of the beverage will depend upon the amount and type of the particular flavoring agent used. Furthermore, the same flavor from different suppliers may have differing intensity. Thus, it is difficult to quantify the level of flavoring agent necessary for the present invention. In addition, any flavoring agent or agents which satisfy the above criteria and are known to be useful to those skilled in the art can be used in the present invention. Non-limiting examples of particularly useful flavoring agents include but are not limited to, lemon-lime, orange, fruit punch, lime, cherry, berry and tangerine.

Any suitable carbohydrate can be used in the beverage compositions described herein and typically the carbohydrate present in the sports beverage may be mono-, di- and higher saccharides, such as, for example, glucose (dextrose), sucrose, maltodextrin, maltose, fructose and trehalose. Various combinations of sweeteners may be used as desired, such as: fructose and glucose; fructose and sucrose; fructose, glucose and sucrose; and sucrose and dextrose, for example. Typically, the carbohydrates in a sports beverage will be present in an amount of from 4% to 10% by weight of the total sports beverage. In another embodiment of the invention, a non-nutritive sweetener or sweeteners can be substituted in whole or in part for tea carbohydrate. Any suitable non-nutritive sweetener, whether natural or synthetic, can be used.

Typical sports beverages in accordance with the specification will include electrolytes as desired. Generally, the electrolytes comprise potassium, sodium and chloride ions and optionally calcium and magnesium ions and are supplied as desired, as is well known to those skilled in the art. The source of the electrolytes may be, for example, sodium chloride, potassium chloride, monopotassium phosphate, sodium citrate, calcium lactate and magnesium oxide. Typical electrolytes for a sports beverage and amounts are, when present, generally in the range of: sodium - 10 to 75 mEq/liter (more typically at least 45 mEq/liter); potassium - 3 to 20 mEq/liter; chloride - 9 to 25 mEq/liter; calcium - 0.5 to 15 mEq/liter; and magnesium - 0.5 to 15 mEq/liter.

In addition, protein may be present in a beverage in accordance with the specification in an amount as desired. Typically, protein will be present in an amount of from 0 to 30 grams/liter of beverage and more typically, when present, in an amount of from 5 grams/liter to 30 grams/liter of beverage or on a weight to volume basis from 0.5% to 3% by weight protein to volume of beverage. Any suitable protein source can be used as is known in the art, including for example, whey protein isolate, casein protein isolate, milk, protein isolate, protein peptides, protein hydrolysates, rice protein, wheat protein, soy protein, soy protein peptides, egg protein. Amino acid may be present in ranges as follows: 2.5 grams/liter to 15 grams/liter or 0.25% to 1.5% on a weight of amino acid to volume of beverage. Suitable amino acids are: leucine, valine, isoleucine, glutamine, arginine, tyrosine, alanine, cystine, histidine, threonine, lysine, phenylalanine and methionine.

One goal of a sports beverage is for electrolyte replacement in the human body. Consequently, the sports beverage may be isotonic or approximately isotonic, that is, the osmolality of the sports beverage can be the same or about the same as the osmolality of human blood. Typical osmolality will be in range of from 250 mOsm/kg to 400 mOsm/kg and more particular 280 mOsm/kg to 340 mOsm/kg.

In accordance with another aspect of the present specification, a coloring agent may be used in the beverage described herein. Any coloring agent that is known to be useful to those skilled in the art can be used.

The present specification is further illustrated, but not limited by, the following example.

A beverage in accordance with the specification may also include other components as desired, including a clouding agent, typically at a concentration of from about 0 to about 100 ppm based on the total sports beverage. Examples of clouding agents include but are not limited to ester gum, SAIB, starch components and mixtures thereof. For example, ester gum may be present at a concentration of from 10 to 50 ppm and more specifically from 15 to 35 ppm. Other components that can be present in a sports beverage include vitamins and minerals, for example.

### Example

To a gallon of unacidified lemon-lime Gatorade® base is added on a total weight basis of the resulting beverage:
phosphoric acid solution (75% by weight) 0.0324 wt% (0.0243 actual based on a 75% by weight solution),
citric acid 0.126wt%,
about a 5.2:1 weight ratio of citric acid to phosphoric acid in absolute quantities, and the resulting solution was stirred until complete and uniform mixing was achieved. The resulting sports beverage had a very clean taste with minimal aftertaste.

## Claims

1. A non-carbonated sports beverage composition comprising:
water;
electrolytes;
a material selected from the group consisting of carbohydrates and non-nutritive sweeteners;
an acidulant system comprising citric acid in an amount from 0.10% to 0.15% by weight of said non-carbonated sports beverage composition and phosphoric acid, wherein the weight ratio of citric acid to phosphoric acid is from 0.5:1 to 13.8:1 and wherein said non-carbonated sports beverage composition has a pH from 2.5 to 4.0.

2. The non-carbonated sports beverage composition in Claim 1
wherein the acidulant system comprises from 0.12% to 0.13% citric acid by weight of said non-carbonated sports beverage composition, wherein the ratio of citric acid to phosphoric acid is from 5.0:1 to 5.2:1 and wherein said non-carbonated sports beverage composition has a pH from 2.7 to 3.3.

3. The non-carbonated sports beverage composition of Claim 1 or Claim 2 wherein the electrolytes comprise sodium, potassium, calcium, magnesium and chloride ions.

4. The non-carbonated sports beverage composition of any preceding claim further comprising at least one flavoring agent.

5. A non-carbonated sports beverage composition comprising water, sodium and potassium ions, at least one flavoring agent, a material selected from the group consisting of carbohydrates and non-nutritive sweetener, and an acidulant system comprising citric acid in an amount from 0.10% to 0.15% by weight of said non-carbonated sports beverage composition and phosphoric acid, wherein the weight ratio of citric acid to phosphoric acid is from 0.5:1 to 13.8:1 and wherein said non-carbonated sports beverage composition has a pH from 2.5 to 4.0.

6. The non-carbonated sports beverage composition of any preceding claim wherein the pH of the beverage composition is in the range of from 2.7 to 3.3.

7. The non-carbonated sports beverage composition of any preceding claim further comprising protein.

8. The non-carbonated sports beverage composition of any preceding claim wherein the non-carbonated sports beverage composition is approximately isotonic.

9. The non-carbonated sports beverage composition of any preceding claim wherein the weight ratio of citric acid to phosphoric acid is 5.2 to 1.

10. The non-carbonated sports beverage composition of any of Claims 1-8 wherein the ratio of citric acid to phosphoric acid is 3.9 to 1.

11. The non-carbonated sports beverage composition of any preceding claim comprising 4% to 10% carbohydrate by weight of the total sports beverage composition.

12. The non-carbonated sports beverage composition of any preceding claim wherein said sweetener is selected from sucrose, dextrose, maltose, maltodextrin, fructose and combinations thereof.

13. The non-carbonated sports beverage composition of any of Claims 1-11 wherein said sweetener comprises a non-nutritive sweetener.

14. A method of preparing a non-carbonated sports beverage composition composed of base components including water, electrolytes and carbohydrate that has a reduced level of aftertaste compared to conventional sports beverages comprising:
combining the base components with an acidulant system by adding citric acid in an amount from 0.10% to 0.15% by weight of said non-carbonated sports beverage composition;
adding phosphoric acid wherein the weight ratio of citric acid to phosphoric acid is from 0.5:1 to 13.8:1; and
wherein said sports beverage composition has a pH from 2.5 to 4.0.

15. The method of Claim 14
wherein the amount of said citric acid is from 0.12% to 0.13% by weight of said non-carbonated sports beverage composition;
wherein the weight ratio of citric acid to phosphoric acid is from 5.0:1 to 5.2:1; and wherein said sports beverage composition has a pH from 2.7 to 3.3.

16. The method of Claim 14 or Claim 15 comprising adding citric and phosphoric acid to the base components to provide a weight ratio of citric acid to phosphoric acid of 5.2 to 1.

## Patentansprüche

1. Nicht-kohlensäurehaltige Sportgetränkezusammensetzung, die Folgendes umfasst:
Wasser;
Elektrolyte;
ein Material, das aus der Gruppe ausgewählt ist, die aus Kohlenhydraten und nicht nahrhaften Süßstoffen besteht;
ein Säuerungsmittelsystem, das Zitronensäure in einer Menge von 0,10 Gew.-% bis 0,15 Gew.-% der genannten nichtkohlensäurehaltigen Sportgetränkezusammensetzung und Phosphorsäure umfasst, wobei das Gewichtsverhältnis von Zitronensäure zu Phosphorsäure 0,5:1 bis 13,8:1 beträgt und die genannte nicht-kohlensäurehaltige Sportgetränkezusammensetzung einen pH-Wert von 2,5 bis 4,0 aufweist.

2. Nicht-kohlensäurehaltige Sportgetränkezusammensetzung nach Anspruch 1,
wobei das Säuerungsmittelsystem 0,12 Gew.-% bis 0,13 Gew.-% Zitronensäure der genannten nichtkohlensäurehaltigen Sportgetränkezusammensetzung umfasst, wobei das Verhältnis von Zitronensäure zu Phosphorsäure 5,0:1 bis 5,2:1 beträgt und die genannte nicht-kohlensäurehaltige Sportgetränkezusammensetzung einen pH-Wert von 2,7 bis 3,3 aufweist.

3. Nicht-kohlensäurehaltige Sportgetränkezusammensetzung nach Anspruch 1 oder Anspruch 2, wobei die Elektrolyte Natrium-, Kalium-, Calcium-, Magnesium- und Chloridionen umfassen.

4. Nicht-kohlensäurehaltige Sportgetränkezusammensetzung nach einem der vorhergehenden Ansprüche, die ferner mindestens einen Aromastoff umfasst.

5. Nicht-kohlensäurehaltige Sportgetränkezusammensetzung, die Folgendes umfasst:
Wasser, Natrium- und Kaliumionen, mindestens einen Aromastoff, ein Material, das aus der Gruppe ausgewählt wird, die aus Kohlenhydraten und nicht nahrhaftem Süßstoff besteht, und ein Säuerungsmittelsystem, das Zitronensäure in einer Menge von 0,10 Gew.-% bis 0,15 Gew.-% der genannten nicht-kohlensäurehaltigen Sportgetränkezusammensetzung und Phosphorsäure umfasst, wobei das Gewichtsverhältnis von Zitronensäure zu Phosphorsäure 0,5:1 bis 13,8:1 beträgt und die genannte nicht-kohlensäurehaltige Sportgetränkezusammensetzung einen pH-Wert von 2,5 bis 4,0 aufweist.

6. Nicht-kohlensäurehaltige Sportgetränkezusammensetzung nach einem der vorhergehenden Ansprüche, wobei der pH-Wert der Getränkezusammensetzung im Bereich von 2,7 bis 3,3 liegt.

7. Nicht-kohlensäurehaltige Sportgetränkezusammensetzung nach einem der vorhergehenden Ansprüche, die ferner Protein umfasst.

8. Nicht-kohlensäurehaltige Sportgetränkezusammensetzung nach einem der vorhergehenden Ansprüche, wobei die nicht-kohlensäurehaltige Sportgetränkezusammensetzung annähernd isotonisch ist.

9. Nicht-kohlensäurehaltige Sportgetränkezusammensetzung nach einem der vorhergehenden Ansprüche, wobei das Gewichtsverhältnis von Zitronensäure zu Phosphorsäure 5,2 bis 1 beträgt.

10. Nicht-kohlensäurehaltige Sportgetränkezusammensetzung nach einem der Ansprüche 1 bis 8, wobei das Verhältnis von Zitronensäure zu Phosphorsäure 3,9 bis 1 beträgt.

11. Nicht-kohlensäurehaltige Sportgetränkezusammensetzung nach einem der vorhergehenden Ansprüche, die 4 Gew.-% bis 10 Gew.-% Kohlenhydrate der gesamten Sportgetränkezusammensetzung umfasst.

12. Nicht-kohlensäurehaltige Sportgetränkezusammensetzung nach einem der vorhergehenden Ansprüche, wobei der genannte Süßstoff aus Sucrose, Dextrose, Maltose, Maltodextrin, Fructose und Kombinationen davon ausgewählt ist.

13. Nicht-kohlensäurehaltige Sportgetränkezusammensetzung nach einem der Ansprüche 1 bis 11, wobei der genannte Süßstoff einen nicht nahrhaften Süßstoff umfasst.

14. Verfahren zur Herstellung einer nichtkohlensäurehaltigen Sportgetränkezusammensetzung, die aus Grundkomponenten besteht, die Folgendes umfassen: Wasser, Elektrolyte und Kohlenhydrat, das im Vergleich zu herkömmlichen Sportgetränken einen geringeren Nachgeschmack aufweist, wobei das Verfahren Folgendes umfasst:
Kombinieren der Grundkomponenten mit einem Säuerungsmittelsystem durch Zugabe von Zitronensäure in einer Menge von 0,10 Gew.-% bis 0,15 Gew.-% der genannten nicht-kohlensäurehaltigen Sportgetränkezusammensetzung,
Zugeben von Phosphorsäure, wobei das Gewichtsverhältnis von Zitronensäure zu Phosphorsäure 0,5:1 bis 13,8:1 beträgt; und
wobei die genannte Sportgetränkezusammensetzung einen pH-Wert von 2,5 bis 4,0 aufweist.

15. Verfahren nach Anspruch 14,
wobei die Menge der genannten Zitronensäure im Bereich von 0,12 Gew.-% bis 0,13 Gew.-% der genannten nichtkohlensäurehaltigen Sportgetränkezusammensetzung liegt;
wobei das Gewichtsverhältnis von Zitronensäure zu Phosphorsäure 5,0:1 bis 5,2:1 beträgt; und
wobei die genannte Sportgetränkezusammensetzung einen pH-Wert von 2,7 bis 3,3 aufweist.

16. Verfahren nach Anspruch 14 oder Anspruch 15, das die Zugabe von Zitronensäure und Phosphorsäure zu den Grundkomponenten umfasst, um ein Gewichtsverhältnis von Zitronensäure zu Phosphorsäure von 5,2 bis 1 bereitzustellen.

## Revendications

1. Composition de boisson de sport non gazeuse comprenant :
de l'eau ;
des électrolytes ;
une matière sélectionnée dans le groupe constitué de glucides et d'édulcorants non nutritifs ;
un système acidulant comprenant de l'acide citrique dans une quantité de 0,10 % à 0,15 % relativement au poids de ladite composition de boisson de sport non gazeuse et de l'acide phosphorique, le rapport pondéral de l'acide citrique contre l'acide phosphorique étant de 0,5:1 à 13,8:1 et ladite composition de boisson de sport non gazeuse ayant un pH de 2,5 à 4,0.

2. Composition de boisson de sport non gazeuse selon la revendication 1,
le système acidulant comprenant de 0,12 % à 0,13 % d'acide citrique relativement au poids de ladite composition de boisson de sport non gazeuse, le rapport de l'acide citrique contre l'acide phosphorique étant de 5,0:1 à 5,2:1 et ladite composition de boisson de sport non gazeuse ayant un pH de 2,7 à 3,3.

3. Composition de boisson de sport non gazeuse selon la revendication 1 ou la revendication 2, les électrolytes comprenant des ions sodium, potassium, calcium, magnésium et chlorure.

4. Composition de boisson de sport non gazeuse selon l'une quelconque des revendications précédentes, comprenant en outre au moins un agent aromatisant.

5. Composition de boisson de sport non gazeuse comprenant de l'eau, des ions sodium et potassium, au moins un agent aromatisant, une matière sélectionnée dans le groupe constitué de glucides et d'édulcorants non nutritifs, et un système acidulant comprenant de l'acide citrique dans une quantité de 0,10 % à 0,15 % relativement au poids de ladite composition de boisson de sport non gazeuse et de l'acide phosphorique, le rapport pondéral de l'acide citrique contre l'acide phosphorique étant de 0,5:1 à 13,8:1 et ladite composition de boisson de sport non gazeuse ayant un pH de 2,5 à 4,0.

6. Composition de boisson de sport non gazeuse selon l'une quelconque des revendications précédentes, le pH de la composition de boisson étant de 2,7 à 3,3.

7. Composition de boisson de sport non gazeuse selon l'une quelconque des revendications précédentes, comprenant en outre des protéines.

8. Composition de boisson de sport non gazeuse selon l'une quelconque des revendications précédentes, la composition de boisson de sport non gazeuse étant approximativement isotonique.

9. Composition de boisson de sport non gazeuse selon l'une quelconque des revendications précédentes, le rapport pondéral de l'acide citrique contre l'acide phosphorique étant de 5,2 à 1.

10. Composition de boisson de sport non gazeuse selon l'une quelconque des revendications 1 à 8, le rapport de l'acide citrique contre l'acide phosphorique étant de 3,9 à 1.

11. Composition de boisson de sport non gazeuse selon l'une quelconque des revendications précédentes, comprenant 4 % à 10 % de glucides relativement au poids de la composition de boisson de sport totale.

12. Composition de boisson de sport non gazeuse selon l'une quelconque des revendications précédentes, ledit édulcorant étant sélectionné parmi le saccharose, le dextrose, le maltose, la maltodextrine, le fructose et des combinaisons de ceux-ci.

13. Composition de boisson de sport non gazeuse selon l'une quelconque des revendications 1 à 11, ledit édulcorant comprenant un édulcorant non nutritif.

14. Procédé de préparation d'une composition de boisson de sport non gazeuse constituée de constituants de base comprenant de l'eau, des électrolytes et des glucides ayant un niveau d'après-goût réduit par comparaison avec des boissons de sport conventionnelles, comprenant :
la combinaison des constituants de base avec un système acidulant par addition d'acide citrique dans une quantité de 0,10 % à 0,15 % relativement au poids de ladite composition de boisson de sport non gazeuse ;
l'addition d'acide phosphorique, le rapport pondéral de l'acide citrique contre l'acide phosphorique étant de 0,5:1 à 13,8:1 ; et
ladite composition de boisson de sport ayant un pH de 2,5 à 4,0.

15. Procédé selon la revendication 14,
la quantité dudit acide citrique étant de 0,12 % à 0,13 % relativement au poids de ladite composition de boisson de sport non gazeuse ;
le rapport pondéral de l'acide citrique contre l'acide phosphorique étant de 5,0:1 à 5,2:1 ; et
ladite composition de boisson de sport ayant un pH de 2,7 à 3,3.

16. Procédé selon la revendication 14 ou la revendication 15 comprenant l'addition d'acide citrique et d'acide phosphorique aux constituants de base pour produire un rapport pondéral de l'acide citrique contre l'acide phosphorique de 5,2 à 1.
